# EUROPÄISCHE PATENTSCHRIFT

(11) **EP 2 666 625 B1**
(45) Veröffentlichungstag und Bekanntmachung des Hinweises auf die Patenterteilung: **03.05.2017**
(21) Anmeldenummer: 13181431.1
(22) Anmeldetag: 29.08.2008
(51) Int. Cl.: B32B 3/20, E04B 1/78

(54) **Wandaufbau und Wärmedämmplatte**
Wall construction and thermal insulation panel
Structure de mur et panneau d'isolation thermique

(30) Priorität: 30.08.2007 DE 102007040938
(43) Veröffentlichungstag der Anmeldung: 27.11.2013
(62) Teilanmeldung aus: 08828126.6
(73) Patentinhaber: Remmers GmbH, 49624 Löningen (DE)
(72) Erfinder: Lohmann, Thomas, 68526 Ladenburg (DE); Engel, Jens, 49565 Bramsche (DE)
(74) Vertreter: Bockhorni & Kollegen

(56) Entgegenhaltungen:
- EP-A- 0 086 681
- EP-A- 1 900 884
- WO-A-92/10624
- WO-A-2006/014858
- DE-A1- 3 317 628
- DE-A1- 19 706 223
- DE-A1-102004 050 207
- ES-A1- 2 161 608

## Beschreibung

Die Erfindung betrifft einen Wandaufbau mit einer Dämmschicht, insbesondere einer innenseitigen Dämmschicht, wobei die Dämmschicht insbesondere als Wärmedämmplatte ausgebildet ist. Weiterhin betrifft die Erfindung eine Wärmedämmplatte mit einer Dämmschicht, insbesondere zur Verwendung in einem Wandaufbau.

Typischerweise werden Gebäude auf der Außenseite des Mauerwerks gedämmt oder mit einem Dämmstoff ausgestattet. Dadurch ist die Temperatur der Wand relativ hoch, weil der Temperaturabfall insbesondere im außenliegenden Dämmstoff stattfindet. Im Fall einer Dämmung der Mauer auf der Innenseite findet der Temperaturabfall im wesentlichen im innenliegenden Dämmstoff statt. Dadurch ist die Temperatur des Mauerwerks viel niedriger als bei einer Außendämmung. Der Dampfdruckgradient ist dann höher und es gelangt mehr Feuchtigkeit in die Wand. Die Kondensatebene befindet sich dann in der Nähe der Dämmschicht auf der Innenseite der Wand. Durch das Kondensat können Bauschäden entstehen.

Um eine leicht zu verarbeitende Innendämmung zu schaffen, die dieses Problem behebt, wird in der DE 203 05 348 U1 ein Wärmedämmelement zur Innenisolierung vorgeschlagen, das auf einer Dämmschicht eine Dampfsperre und eine dem Innenraum zugewandte, feuchtigkeitsaufnehmende Stabilisierungsschicht aufweist. Die aus dem Innenraum stammende Feuchtigkeit wird von der Dampfsperre aufgehalten. Ein Problem ist bei Lösungen dieser Art darin zu sehen, daß die Dampfsperre leicht verletzt werden kann, beispielsweise durch Einschlagen von Nägeln. Ein weiteres Problem besteht in der Verhinderung der Austrocknung von Schlagregenniederschlägen nach Innen. Aufgrund der Innendämmung wird die Gebäudekonstruktion selbst kälter, wodurch die zur Verdunstung des in die Außenseite eingedrungenen Regens notwendige Energie nicht mehr zur Verfügung steht. Somit verbleibt mehr Feuchte in der Konstruktion und die Frostgefährdung steigt.

Die DE 101 46 174 C2 schlägt eine Wärmedämmplatte vor, die neben einer Dämmschicht innenseitig eine wasserbeständige mineralische Schicht mit einer besonderen Kapillaraktivität aufweist. Hierzu wird typischerweise Calciumsilikat verwendet. Mit dem Calciumsilikat wird die Diffusionsoffenheit der Wand aufrechterhalten. Ein Problem dabei ist jedoch die verhältnismäßig geringe Wärmedämmleistung der homogen aufgebauten Calciumsilikatschicht, die deutlich niedriger ist als die herkömmlicher Dämmstoffe für die Außendämmung. Auch die Kosten der Calciumsilikatschicht sind vergleichsweise hoch.

Schließlich ist aus der WO 92/10624 A eine Dämmung bekannt, bei der an einer Gebäudewand eine Dämmschicht aufgebracht wird. Hierzu werden mit Durchgangsöffnungen versehene Dämmplatten durch Putz an der Gebäudewand angeordnet, wobei der Putz die Durchgangsöffnungen durchgreift und als solcher kapillarleitfähig ist. Das Flächenverhältnis zwischen den kapillarleitfähigen Bereichen und der Fläche der Dämmschicht als solche beträgt hierbei zwischen 7 und 30 %. Ferner beschreibt die DE 3317628 A1 Wärmedämmplatten aus Styropor, die mit Öffnungen versehen sind, in welche Putz eindringen kann, worüber ebenfalls Feuchtigkeit vom Mauerwerk über die Putzschicht abgeführt werden kann.

Der Erfindung liegt die Aufgabe zugrunde, einen Wandaufbau und eine Wärmedämmplatte der eingangs genannten Art zu schaffen, die bei hoher Dämmung diffusionsoffen und preisgünstig herstellbar ist. Die Lösung dieser Aufgabe erfolgt mit einem Wandaufbau mit den Merkmalen des Patentanspruchs 1. Hinsichtlich der Wärmedämmplatte erfolgt die Lösung der Aufgabe mit einer Wärmedämmplatte mit den Merkmalen des Patentanspruchs 9. Vorteilhafte Ausgestaltungen der Erfindung sind in den Unteransprüchen beschrieben.

Bei einem Wandaufbau mit einer Dämmschicht, insbesondere innenseitigen Dämmschicht, insbesondere einer Wärmedämmplatte, ist erfindungswesentlich vorgesehen, daß die Schicht kapillarleitfähige Bereiche aufweist, die von einer Seite der Dämmschicht zur anderen Seite der Dämmschicht verlaufen. Die kapillarleitfähigen Bereiche sind dabei durchgehend ausgebildet. "Durchgehend" ist im Sinne einer ununterbrochenen kapillaren Leitfähigkeit zu verstehen. Die Seiten der Dämmschicht bezeichnen die dem Innenraum und dem Mauerwerk zugewandten Flächen.

Durch die kapillarleitfähigen Bereiche kann Kondensat von der Außenseite der Dämmschicht also der wandseitigen Seite der Dämmschicht abgeführt und zurück in den Innenraum geführt werden. Dadurch werden Feuchtigkeits- und Schimmelprobleme im Mauerbereich vermieden. Außerdem wird die Diffusionsfähigkeit der Konstruktion sichergestellt. Auch kann von Außen eingedrungene Feuchtigkeit nach Innen abgegeben werden und die Konstruktion wird so getrocknet. Dies ist insbesondere an der Schlagregenseite von Relevanz.

Mit der Erfindung wird eine preisgünstige, sehr gut wärmedämmende Platte bzw. ein solcher Wandaufbau geschaffen, der kapillarleitfähig ist. Im Ergebnis wird dadurch eine diffusionsaktive und kapillarleitfähige Innendämmung geschaffen, die eine mit der heute üblichen Außendämmung vergleichbare Dämmung und Energieeinsparung erreicht.

In einer bevorzugten Ausgestaltung sind die kapillarleitfähigen Bereiche als kapillarleitfähige Durchbrüche ausgebildet, insbesondere als Durchbrüche, die mit einem kapillarleitfähigen Material gefüllt sind. Alternativ können die Durchbrüche selbst so ausgebildet sein, daß diese von sich aus kapillarleitfähig sind. Dies kann insbesondere bei Schaumstoffplatten erreicht werden, die quer zur Plattenebene verlaufende Kapillaren ausbilden. Die Kapillare können senkrecht oder schräg zur Plattenebene verlaufen. Insbesondere bei dieser Art der Ausführungsform können die kapillarleitfähigen Bereiche flächig ausgebildet sein und nahezu die gesamte Dämmschicht ausmachen. Bevorzugt werden in einem solchen Fall die Wände dieser Durchbrüche mit benetzungsfördernden Stoffen beschichtet. Die kapillarleitfähigen Bereiche machen 1 bis weniger als 2 % der gedämmten Fläche aus.

In einer bevorzugten Ausgestaltung der Erfindung weist der Wandaufbau eine kapillarleitfähige Schicht auf, die wandseitig hinter der Dämmschicht angeordnet und mit den kapillarleitfähigen Bereichen verbunden ist. Eine solche Schicht kann anfallendes Kondensat aufnehmen und den kapillarleitfähigen Bereichen zuführen. Außerdem stellt sie die Atmungsfähigkeit des Wandaufbaus sicher und leistet einen Beitrag zur Wärmedämmung. Diese Schicht kann entweder Bestandteil der Dämmung bzw. der Dämmplatte sein oder ist bevorzugt gleichzeitig eine Klebschicht, mit der die Wärmedämmplatte an einer Mauer befestigt wird. Insbesondere kann dies auch ein Material, beispielsweise ein Mörtel sein, der beim Aufbringen einer Dämmplatte mit Durchbrüchen einerseits die kapillarleitfähige Schicht ausbildet und andererseits gleichzeitig durch die vorgefertigten Durchbrüche in einer Dämmplatte durchtritt und in diesen Durchbrüchen die kapillarleitfähigen Bereiche ausbildet. Der Wandaufbau besteht aus einzelnen Schichten, denen spezifische Aufgaben wie Wärmedämmung, Atmungsfähigkeit oder Feuchtepufferung zugewiesen sind.

Ein weiterer Aspekt der Erfindung besteht in der Bereitstellung einer Wärmedämmplatte nach Anspruch 9. Die kapillarleitfähigen Bereiche sind dabei quer zur Dämmschicht ausgerichtet. Der Begriff "quer" ist hier als geometrische Orientierung in dem Sinne zu verstehen, daß die kapillarleitfähigen Bereiche quer zur Plattenebene verlaufen, also die beiden sich gegenüberliegenden Plattenflächen miteinander verbinden. Dies kann senkrecht oder unter einem Winkel oder schräg zur Plattenebene erfolgen. Bevorzugt sind die kapillarleitfähigen Bereiche senkrecht zur Plattenebene orientiert. Die kapillarleitfähigen Bereiche sind auch hier "durchgehend" durch die Dämmschicht ausgebildet. Insbesondere durchdringen diese Bereiche vollständig die Dämmschicht. Die übrige Dämmschicht ist nicht oder nur unwesentlich kapillarleitfähig, jedenfalls
wesentlich weniger kapillarleitfähig als die eingebrachten kapillarleitfähigen Bereiche.

Bevorzugt sind diese kapillarleitfähigen Bereiche durch Durchbrüche realisiert, in denen ein kapillarleitfähiges Material eingebracht ist. Der Aufbau der Wärmedämmplatte ist bevorzugt in ähnlicher Form ausgestaltet wie der Wandaufbau. Bevorzugt weist die Wärmedämmplatte auf der Seite, die zum wandseitigen Einbau vorgesehen ist, eine kapillarleitfähige Schicht auf, die mit den kapillarleitfähigen Bereichen verbunden ist. Die Materialien der kapillarleitfähigen Schicht und der kapillarleitfähigen Bereiche sind bevorzugt identisch. Es können jedoch auch unterschiedliche Stoffe verbunden werden. Die kapillarleitfähigen Bereiche können dabei auch bis in die kapillarleitfähige Schicht hinein ausgebildet und auch bis zu deren Ende ausgebildet sein. Auf der gegenüberliegenden Seite weist die Wärmedämmplatte bevorzugt eine kapillarleitfähige Feuchtepufferschicht auf. Diese dient zur kurzfristigen Aufnahme von Feuchtigkeit aus dem Innenraum und zur Regulierung des Raumklimas. Diese Schicht trägt auch einen Anteil zur Wärmedämmung bei. Weiterhin kann über diese Schicht auch die durch die kapillarleitfähigen Bereiche hindurch transportierte Feuchtigkeit verteilt und damit über eine größere Oberfläche an den Innenraum abgegeben werden. Alternativ können die kapillarleitfähigen Bereiche auch durch Hohlräume gebildet sein. Insbesondere z.B. bei Verwendung von Schaumstoff oder anderen ähnlichen Materialien kann durch Einbringen einer großen Vielzahl von kleinsten Stichen oder Schnitten eine Kapillarleitfähigkeit erreicht werden. Mit solchen, z.B. mit einer Nadel eingebrachten Stichen wird ein sehr kleiner kapillarleitfähiger Hohlraum bzw. Öffnung geschaffen, in die nicht unbedingt ein anderes Material eingesetzt werden müßte, sondern auch als Hohlraum bzw. bei Füllung mit Luft kapillarleitfähig ist.

In einer anderen bevorzugten Ausgestaltung der Erfindung ist die Dämmschicht der Dämmplatte und auch die Dämmschicht in dem Wandaufbau dicker als die anderen beschriebenen Schichten. Insbesondere ist die Dämmschicht bevorzugt dicker als die Summe der Dicken der kapillarleitfähigen Schicht und der Feuchtepufferschicht zusammen, bevorzugt sogar dicker als das zweifache der Summe aus kapillarleitfähiger Schicht und Feuchtepufferschicht.

Die Dämmschicht ist bevorzugt aus bei der Außendämmung gängigen Materialien, wie Mineralwolle und Schaumstoffprodukten hergestellt. Diese weisen typischerweise deutlich günstigere Dämmwerte als Calciumsilikatplatten auf. Die Dämmschicht ist dabei ohne die kapillarleitfähigen Durchbrüche typischerweise nicht oder nur unwesentlich kapillarleitfähig. Materialien, die hier verwendet und mit kapillarleitfähigen Durchbrüchen versehen werden können, sind beispielsweise Schaumglas, Blähperlit, expandiertes Polystyrol, expandiertes Vermiculit, flexibler Elastomerschaum, Mineralwolle, Polyisocyanurat-Schaum, Polyethylenschaum, Phenolharzschaum/hartschaum, Polyurethan-Hartschaum, Harnstoff-Formaldehydharz-Schaum, extrudierter Polystyrolschaum, expandierter Kork, Blähtonleichtzuschlagsstoffe, Holzfaser, Holzwolle und Zellulosefüllstoff. Die kapillarleitende Schicht kann ebenfalls aus einer Vielzahl verschiedener Materialen hergestellt sein, die im folgenden beispielhaft aufgezählt werden. Die kapillarleitfähigen Bereiche können mit Durchbrüchen realisiert sein, die mit einem kapillarleitfähigen Material gefüllt sind. Bevorzugt ist das Material in den Durchbrüchen dasselbe wie das der kapillarleitfähigen Schicht. Dadurch läßt sich die Herstellung vereinfachen. Bei der Herstellung des Wandaufbaus besteht auch die Möglichkeit, eine solche Schicht, z.B. Mörtel, zuerst auf einer Wand oder einer Mauer aufzubringen und Wärmedämmplatten mit vorgefertigten Durchbrüchen in den kapillarleitfähigen Mörtel einzudrücken, so daß dieser aus den Löchern herausquillt und dadurch die kapillarleitfähigen Bereiche ausbildet. Für die kapillarleitfähige Schicht kann ein Mörtel in verschiedenen Zusammensetzungen verwendet werden. Als Füllstoffe können sowohl poröse als auch nicht poröse Formen eingesetzt werden. Als Bindemittel können mineralische Bindemittel wie Zement, Gips, Tonerdeschmelzzement, Silikat oder Phosphat eingesetzt werden. Alternativ können auch Harze als Bindemittel eingesetzt werden. Als Harze können Naturharze, 2-Komponentenharze wie Epoxyharze, PMMA oder PU oder es können auch Dispersionsharze wie Acrylat oder Stryrol-Butadien oder andere eingesetzt werden.

Die sichtseitige, insbesondere innenraumseitige Feuchtepufferschicht ist bevorzugt als Putz ausgebildet. Dieser kann wiederum bevorzugt aus Lehm, einem Klimaputz oder anderen diffusionsfähigen Materialien bestehen. Zur Pufferung können zusätzlich geeignete Materialien wie Glykole, wasserspeichernde Polymere oder ähnliche enthalten sein.

Es liegt ebenfalls im Bereich der Erfindung die Wärmedämmplatte bzw. den Wandaufbau als Innendämmung, Klimaplatte für Feuchträume und auch für Decke, Wand und Boden einzusetzen. Der Wandaufbau und auch die Wärmedämmplatte können grundsätzlich auch so ausgerichtet werden, daß eine solche Wärmedämmung auf der Außenseite des Mauerwerks angeordnet wird.

Es versteht sich, daß die oben gegebenen Detailbeschreibungen, insbesondere hinsichtlich Materialauswahl und Funktion und in der folgenden Figurenbeschreibung, insbesondere hinsichtlich der Dimensionierung angegebenen Einzelheiten, die entweder für den Wandaufbau oder für Wärmedämmplatte beschrieben sind, umgekehrt auch für die Wärmedämmplatte oder den Wandaufbau zutreffen und beansprucht werden.

Nachfolgend wird die Erfindung anhand eines in der Zeichnung dargestellten bevorzugten Ausführungsbeispiels weiter erläutert. Im Einzelnen zeigen die schematischen Darstellungen in:
- Fig. 1:: eine Draufsicht auf eine erfindungsgemäße Dämmplatte;
- Fig. 2:: eine geschnittene Seitenansicht einer erfindungsgemäßen Dämmplatte; und
- Fig. 3:: eine geschnittene Seitenansicht eines erfindungsgemäßen Wandaufbaus.

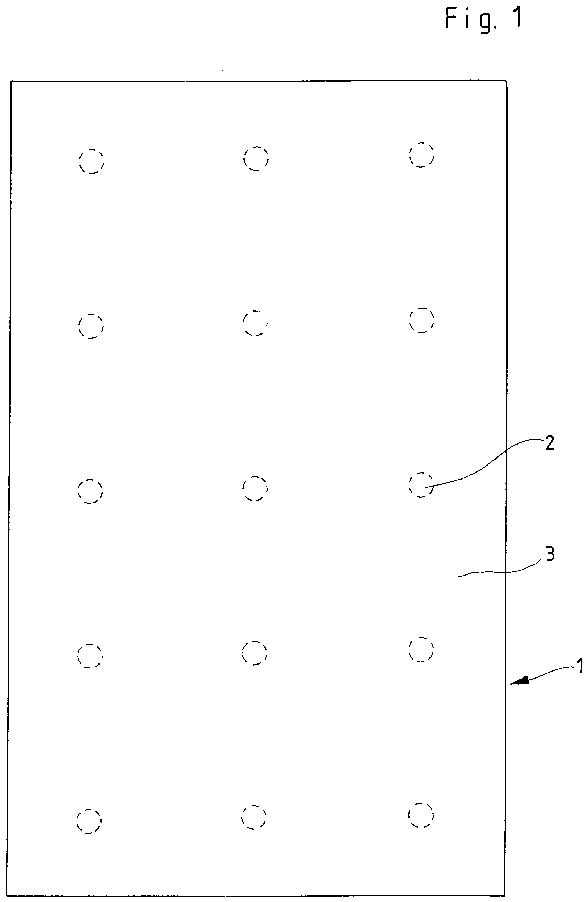

In Fig. 1 ist eine erfindungsgemäße Wärmedämmplatte 1 dargestellt, die im wesentlichen eine Dämmschicht 3 und quer zur Dämmplattenebene ausgerichtete kapillarleitfähige Bereiche 2 aufweist, die hier als Durchbrüche ausgebildet sind. Diese erstrecken sich bevorzugt senkrecht zur Plattenebene und durchdringen diese vollständig, so daß ein Flüssigkeitstransport durch die Dämmschicht 3 hindurch möglich ist. Die Durchbrüche 2 sind in der Dämmschicht 3 gleichmäßig verteilt. Im gezeigten Beispiel nehmen diese Durchbrüche etwa 2 % der Fläche ein. Die Durchbrüche sind hier aus produktionstechnischen Gründen im Querschnitt kreisförmig. Grundsätzlich ist jedoch Form, Verlauf und Größe der einzelnen Durchbrüche nicht relevant.

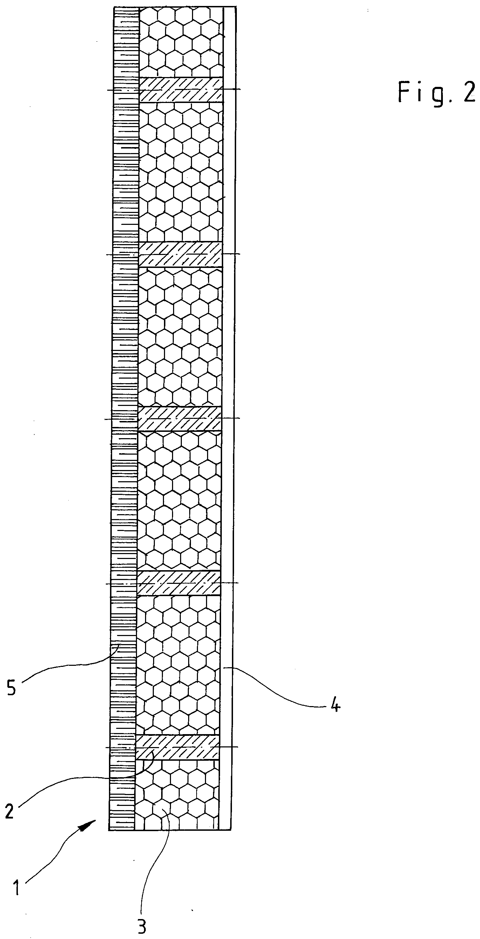

In Fig. 2 ist die Wärmedämmplatte 1 im Querschnitt dargestellt. Hier sind insbesondere auch die Dämmschicht 3 und die die Wärmedämmschicht 3 durchdringenden kapillarleitfähigen Bereiche 2 dargestellt. Wandseitig weist die Wärmedämmplatte 1 eine kapillarleitfähige Schicht 4 auf, die mit den kapillarleitfähigen Bereichen 2 in Verbindung steht. Diese Schicht 4 nimmt anfallendes Kondensat auf und führt sie den kapillarleitfähigen Bereichen 2 zu. Die kapillarleitfähigen Bereiche 2 leiten das Kondensat an die Außenseite der Wärmedämmplatte 1, also an den Innenraum weiter. Bevorzugt ist das Material der vertikalen Kapillarschicht 4 und das in den kapillarleitfähigen Bereichen 2 angeordnete Material identisch. Innenraumseitig weist die Wärmedämmplatte 1 noch eine kapillarleitfähige Pufferschicht 5 auf. Die Hauptaufgabe dieser Schicht ist die Abpufferung der Raumluftfeuchtigkeit über 24 Stunden und die Abgabe und Verteilung des durch die kapillarleitfähigen Bereiche 2 transportierten Kondensats. Auch diese Schicht 5 leistet einen Beitrag zur Atmungsaktivität und Wärmedämmung. In dieser bevorzugten Ausgestaltung beträgt die Schichtdicke der Dämmschicht 3 etwa 2/3 der Gesamtdicke, während die vertikale Kapillarschicht 4 1/6 und die Feuchtepufferschicht 5 2/6 ausmacht, also etwa doppelt so stark ist wie die vertikale Kapillarschicht 4. Die Dämmschicht 3 ist bevorzugt die dickste der drei Schichten. Die Dämmschicht mit den kapillarleitenden Durchbrüchen kann Dicken zwischen 5 mm und 120 mm, bevorzugt 15 mm und 80 mm, insbesondere zwischen 20 mm und 60 mm und bevorzugt eine Stärke von 40 mm aufweisen. Die kapillarleitende Schicht 4 kann Stärken zwischen 0,1 mm und 20 mm insbesondere Stärken zwischen 1 mm und 5 mm aufweisen. Die Pufferschicht 5 kann Stärken zwischen 0,5 mm und 40 mm und bevorzugt zwischen 2 mm und 20 mm und insbesondere im Bereich von 4 mm bis 10 mm aufweisen. Die kapillarleitfähigen Bereiche 2 können anders als in der Zeichnung dargestellt auch bis in die vertikale Kapillarschicht 4 hinein oder auch bis in die Pufferschicht 5 hineinragen oder sogar den Abschluß bilden.

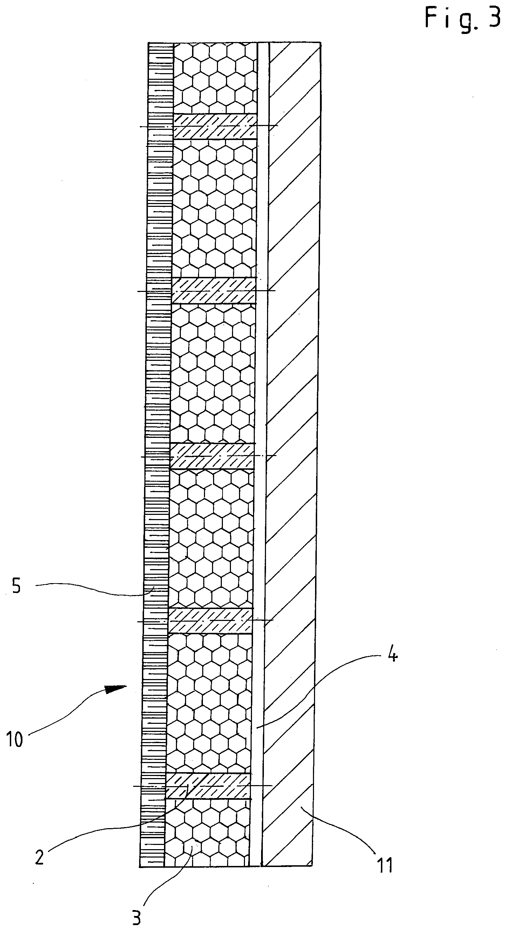

In Fig. 3 ist ein erfindungsgemäßer Wandaufbau 10 dargestellt. Dabei ist innenseitig die vorher beschriebene Dämmplatte angebracht oder der Wandaufbau ist in vergleichbarer Form vor Ort erstellt worden. Wesentlich ist, daß innenseitig an der Wand 11 eine Dämmschicht 3 mit quer zur Wand oder Dämmebene ausgerichteten kapillarleitfähigen Bereichen 2 angeordnet ist. Die kapillarleitfähige Schicht 4 kann bei diesem Wandaufbau sowohl Teil einer Dämmplatte sein, die aufgebracht wird oder gleichzeitig als Kleberschicht dienen, mit der die Dämmschicht 2 an der Wand 11 befestigt wird. Die Schicht 4 kann dabei auch aus einem Material oder in einer solchen Stärke auf der Wand 11 aufgebracht werden, daß beim Anbringen einer Dämmplatte mit Durchbrüchen diese Durchbrüche durch das kapillarleitfähige Material ausgefüllt werden. Die äußere kapillarleitfähige Pufferschicht 5 kann ebenfalls vor Ort erstellt oder alternativ als fertiges Plattensystem aufgebracht sein.

Ein konkretes Beispiel sieht dabei so aus, daß die Pufferschicht 5 von einem 6 mm starken Feuchteregulierungsputz gebildet ist. Zentral ist die Dämmschicht 3 vorgesehen, die hier aus einer 50 mm starken Schicht aus Polyurethan oder Polystyrol besteht. Dieses Material ist für sich gesehen nicht oder nur unwesentlich kapillarleitfähig. In einem quadratischen Raster mit Abständen von rund 40 mm sind Durchbrüche vorgesehen, die jeweils kreisförmig sind und einen Durchmesser von etwa 4 mm aufweisen. In den Durchbrüchen ist ein kapillarleitfähiger Mörtel eingebracht, der so den kapillarleitfähigen Bereich 2 ausbildet. Bei Ausbildung einer Dämmplatte ist das Raster so ausgebildet, daß die Durchbrüche zum Rand noch das halbe Rastermaß aufweisen, so daß bei Zusammensetzen zweier Dämmplatten das Raster wieder vollständig und kontinuierlich ausgebildet ist. An die Dämmschicht 3 schließt sich die Kapillarschicht 4 an, die im bevorzugten Ausführungsbeispiel aus einem kapillarleitfähigen Ansetzmörtel mit einer Schichtdicke von 5 mm gebildet ist. Eine solche Dämmplatte wird für die Innendämmung eingesetzt, kann jedoch auch grundsätzlich zur Außendämmung verwendet werden.

## Patentansprüche

1. Wandaufbau mit einer innenseitig an einer Wand angeordneten Dämmschicht (3), wobei die Dämmschicht als Wärmedämmplatte (1) ausgebildet ist und kapillarleitfähige Bereiche (2) aufweist, die durchgehend von einer Seite der Dämmschicht zur anderen Seite der Dämmschicht verlaufen,
**dadurch gekennzeichnet, dass** Wandaufbau (10) eine kapillarleitfähige Schicht (4) aufweist, die wandseitig hinter der Dämmschicht (3) angeordnet und mit den kapillarleitfähigen Bereichen (2) verbunden ist, und dass die kapillarleitfähigen Bereiche 1 % bis kleiner 2% der Fläche der Dämmschicht ausmachen.

2. Wandaufbau nach Anspruch 1, **dadurch gekennzeichnet, dass** die kapillarleitfähigen Bereiche (2) als kapillarleitfähige Durchbrüche, die mit einem kapillarleitfähigen Material gefüllt sind, ausgebildet sind.

3. Wandaufbau nach Anspruch 1, **dadurch gekennzeichnet, dass** die kapillarleitfähigen Bereiche (2) durch kapillaraktive Hohlräume gebildet sind.

4. Wandaufbau nach einem der vorhergehenden Ansprüche, **dadurch gekennzeichnet, dass** die kapillarleitfähigen Bereiche flächig ausgebildet sind und im wesentlichen die gesamte Dämmschicht ausmachen.

5. Wandaufbau nach Anspruch 4, **dadurch gekennzeichnet, dass** die kapillarleitfähige Schicht (4) aus demselben Material wie das Material in den kapillarleitfähigen Bereichen (2) besteht.

6. Wandaufbau nach einem der Ansprüche 4 oder 5, **dadurch gekennzeichnet, dass** die kapillarleitfähige Schicht (4) eine Klebschicht ist.

7. Wandaufbau nach einem der vorhergehenden Ansprüche, **dadurch gekennzeichnet, dass** der Wandaufbau (10) sichtseitig eine kapillarleitfähige Feuchtepufferschicht (5) aufweist.

8. Wandaufbau nach einem der vorhergehenden Ansprüche, **dadurch gekennzeichnet, dass** die Dämmschicht (3) dicker ist als die kapillarleitfähige Schicht (4) und die kapillarleitfähige Feuchtepufferschicht (5), insbesondere mehr als doppelt so dick ist, wie die Summe der beiden anderen Schichten.

9. Wärmedämmplatte mit einer Dämmschicht (3) als Innendämmung für einen Wandaufbau nach einem der Ansprüche 1 bis 8, wobei die Dämmschicht (3) kapillarleitfähige Bereiche (2) aufweist, die durchgehend von einer Seite der Dämmschicht zur anderen Seite der Dämmschicht verlaufen, **dadurch gekennzeichnet, dass** die Wärmedämmplatte eine kapillarleitfähige Schicht (4) aufweist, die wandseitig hinter der Dämmschicht (3) angeordnet und mit den kapillarleitfähigen Bereichen (2) verbunden ist, und dass die kapillarleitfähigen Bereiche 1% bis kleiner 2% der Fläche der Dämmschicht ausmachen.

10. Wärmedämmplatte nach Anspruch 9, **dadurch gekennzeichnet, dass** die kapillarleitfähigen Bereiche (2) sich senkrecht durch die Dämmschicht (3) erstrecken.

11. Wärmedämmplatte nach einem der Ansprüche 9 oder 10, **dadurch gekennzeichnet, dass** die kapillarleitfähigen Bereiche (2) als kapillarleitfähige Durchbrüche ausgebildet sind, insbesondere als Durchbrüche, die mit einem kapillarleitfähigen Material gefüllt sind, oder flächig ausgebildet sind und im wesentlichen die gesamte Dämmschicht (3) ausmachen.

12. Wärmedämmplatte nach Anspruch 9 oder 10, **dadurch gekennzeichnet, dass** die kapillarleitfähigen Bereich (2) von kapillaraktiven Hohlräumen gebildet sind.

13. Wärmedämmplatte nach einem der Ansprüche 9 bis 12, **dadurch gekennzeichnet, dass** die Wärmedämmplatte (1) eine kapillarleitfähige Feuchtepufferschicht (5) aufweist.

14. Wärmedämmplatte nach Anspruch 13, **dadurch gekennzeichnet, dass** die kapillarleitfähige Feuchtepufferschicht (5) und die kapillarleitfähige Schicht (4) auf entgegengesetzten Seiten der Dämmschicht (3) angeordnet sind.

15. Wärmedämmplatte nach einem der Ansprüche 12 bis 14, **dadurch gekennzeichnet, dass** die Dämmschicht (3) dicker ist als die kapillarleitfähige Schicht (4) und die kapillarleitfähige Feuchtepufferschicht (5), insbesondere mehr als doppelt so dick ist, wie die Summe der beiden anderen Schichten.

16. Wärmedämmplatte nach einem der Ansprüche 9 bis 15, **dadurch gekennzeichnet, dass** die Dämmschicht eine Dicke von 15 mm bis 80 mm, vorzugsweise 20 mm bis 60 mm, insbesondere eine Stärke von 40 mm aufweist und/oder dass die kapillarleitende Schicht eine Stärke zwischen 0,1 mm und 20 mm, insbesondere zwischen 1 mm und 5 mm aufweist, und/oder dass die Pufferschicht eine Stärke zwischen 0,5 mm und 40 mm, bevorzugt 2 mm bis 20 mm, insbesondere bevorzugt 4 mm bis 10 mm aufweist.

## Claims

1. A wall construction with an insulation layer (3) being arranged at the inside at a wall, the insulation layer being configured as a heat insulation plate (1) and comprising capillary-conductive regions (2) which run continuously from one side of the insulation layer to the other side of the insulation layer,
**characterized in that** the wall construction (10) comprises a capillary-conductive layer (4) which is arranged behind the insulation layer (3) on the wall side and is connected with the capillary-conductive regions (2), and **in that** the capillary-conductive regions occupy 1% to less than 2 % of the area of the insulation layer.

2. The wall construction according to claim 1, **characterized in that** the capillary-conductive areas (2) are formed as capillary-conductive apertures which are filled with a capillary-conductive material.

3. The wall construction according to claim 1, **characterized in that** the capillary-conductive areas (2) are formed by capillary-active cavities.

4. The wall construction according to one of the preceding claims, **characterized in that** the capillary-conductive areas are formed plane and essentially occupy the complete insulation layer.

5. The wall construction according to claim 4, **characterized in that** the capillary-conductive layer (4) consists of the same material as the material in the capillary-conductive regions (2).

6. The wall construction according to one of the claims 4 or 5, **characterized in that** the capillary-conductive layer (4) is an adhesive layer.

7. The wall construction according to one of the preceding claims, **characterized in that** the wall construction (10) comprises a capillary-conductive moisture buffer layer (5) on the visible side.

8. The wall construction according to one of the preceding claims, **characterized in that** the insulation layer (3) is thicker than the capillary-conductive layer (4) and the capillary-conductive moisture buffer layer (5), in particular is more than twice as thick as the sum of the two other layers.

9. A thermal insulation plate with an insulation layer (3) as an inner insulation for a wall construction according to one of the claims 1 to 8, with the insulation layer (3) comprising capillary-conductive areas (2) which run continuously from one side of the insulation layer to the other side of the insulation layer, **characterized in that** the thermal insulation plate comprises a capillary-conductive side (4) which is arranged behind the insulation layer (3) at the wall side and is connected with the capillary-conductive areas (2), and that the capillary-conductive areas occupy 1 % to less than 2 % of the area of the insulation layer.

10. The thermal insulation plate according to claim 9, **characterized in that** the capillary-conductive areas (2) extend perpendicularly through the insulation layer (3).

11. The thermal insulation plate according to one of the claims 9 or 10, **characterized in that** the capillary-conductive areas (2) are formed as capillary-conductive apertures, in particular as apertures which are filled with a capillary-conductive material or which are formed plane and essentially occupy the complete insulation layer (3).

12. The thermal insulation plate according to claim 9 or 10, **characterized in that** the capillary-conductive areas (2) are formed by capillary-active cavities.

13. The thermal insulation plate according to one of the claims 9 to 12, **characterized in that** the thermal insulation plate (1) has a capillary-conductive moisture buffer layer (5).

14. The thermal insulation plate according to claim 13, **characterized in that** the capillary-conductive moisture buffer layer (5) and the capillary-conductive layer (4) are arranged on opposite sides of the insulation layer (3).

15. The thermal insulation plate according to one of the claims 12 to 14, **characterized in that** the insulation layer (3) is thicker than the capillary-conductive layer (4) and the capillary-conductive moisture buffer layer (5), in particular is more than twice as thick as the sum of the two other layers.

16. The thermal insulation plate according to one of the claims 9 to 15, **characterized in that** the insulation layer has a thickness of 15 mm to 80 mm, preferably of 20 mm to 60 mm, in particular a thickness of 40 mm and/or that the capillary-conductive layer has a thickness between 0.1 mm and 20 mm, in particular between 1 mm and 5 mm, and/or that the buffer layer has a thickness between 0.5 mm and 40 mm, preferably 2 mm to 20 mm, in particular preferably 4 mm to 10 mm.

## Revendications

1. Structure de mur comprenant une couche isolante (3) qui est disposée face intérieure sur un mur, dans laquelle ladite couche isolante est réalisée en tant que panneau isolant thermique (1) et présente des zones conductrices capillaires (2) qui s'étendent en continu d'un côté de la couche isolante vers l'autre côté de la couche isolante, **caractérisée par le fait que** la structure de mur (10) présente une couche conductrice capillaire (4) qui, du côté du mur, est disposée derrière la couche isolante (3) et qui est reliée aux zones (2) conductrices capillaires, et que lesdites zones conductrices capillaires représentent entre 1 % et moins de 2 % de la surface de la couche isolante.

2. Structure de mur selon la revendication 1, **caractérisée par le fait que** les zones (2) conductrices capillaires sont conçues en tant qu'ajours conducteurs capillaires qui sont remplis d'une matière conductrice capillaire.

3. Structure de mur selon la revendication 1, **caractérisée par le fait que** les zones (2) conductrices capillaires sont formées par des cavités capillaires actives.

4. Structure de mur selon l'une quelconque des revendications précédentes, **caractérisée par le fait que** les zones conductrices capillaires sont réalisées en nappe et représentent pour l'essentiel l'ensemble de la couche isolante.

5. Structure de mur selon la revendication 4, **caractérisée par le fait que** la couche (4) conductrice capillaire est constituée de la même matière que la matière dans les zones (2) conductrices capillaires.

6. Structure de mur selon l'une quelconque des revendications 4 ou 5, **caractérisée par le fait que** la couche (4) conductrice capillaire est une couche adhésive.

7. Structure de mur selon l'une quelconque des revendications précédentes, **caractérisée par le fait que** la structure de mur (10) comprend du côté visible une couche conductrice capillaire à effet tampon sur l'humidité (5).

8. Structure de mur selon l'une quelconque des revendications précédentes, **caractérisée par le fait que** la couche isolante (3) est plus épaisse que la couche (4) conductrice capillaire et la couche (5) conductrice capillaire à effet tampon sur l'humidité, en particulier plus que deux fois plus épaisse que la somme des deux autres couches.

9. Panneau isolant thermique comprenant une couche isolante (3) en tant qu'isolation intérieure pour une structure de mur selon l'une quelconque des revendications 1 à 8, dans lequel ladite couche isolante (3) présente des zones conductrices capillaires (2) qui s'étendent en continu d'un côté de la couche isolante vers l'autre côté de la couche isolante, **caractérisé par le fait que** le panneau isolant thermique présente une couche conductrice capillaire (4) qui, du côté du mur, est disposée derrière la couche isolante (3) et qui est reliée aux zones (2) conductrices capillaires, et que lesdites zones conductrices capillaires représentent entre 1 % et moins de 2 % de la surface de la couche isolante.

10. Panneau isolant thermique selon la revendication 9, **caractérisé par le fait que** les zones (2) conductrices capillaires s'étendent perpendiculairement à travers la couche isolante (3).

11. Panneau isolant thermique selon l'une quelconque des revendications 9 ou 10, **caractérisé par le fait que** les zones (2) conductrices capillaires sont réalisées en tant qu'ajours conducteurs capillaires, en particulier en tant qu'ajours qui sont remplis d'une matière conductrice capillaire, ou sont réalisées en nappe et représentent pour l'essentiel l'ensemble de la couche isolante (3).

12. Panneau isolant thermique selon la revendication 9 ou 10, **caractérisé par le fait que** les zones (2) conductrices capillaires sont formées par des cavités capillaires actives.

13. Panneau isolant thermique selon l'une quelconque des revendications 9 à 12, **caractérisé par le fait que** le panneau isolant thermique (1) comprend une couche conductrice capillaire à effet tampon sur l'humidité (5).

14. Panneau isolant thermique selon la revendication 13, **caractérisé par le fait que** la couche (5) conductrice capillaire à effet tampon sur l'humidité et la couche (4) conductrice capillaire sont disposées sur des côtés opposés de la couche isolante (3).

15. Panneau isolant thermique selon l'une quelconque des revendications 12 à 14, **caractérisé par le fait que** la couche isolante (3) est plus épaisse que la couche (4) conductrice capillaire et la couche (5) conductrice capillaire à effet tampon sur l'humidité, en particulier plus que deux fois plus épaisse que la somme des deux autres couches.

16. Panneau isolant thermique selon l'une quelconque des revendications 9 à 15, **caractérisé par le fait que** la couche isolante présente une épaisseur comprise entre 15 mm et 80 mm, de préférence entre 20 mm et 60 mm, en particulier une épaisseur de 40 mm, et/ou que la couche conductrice capillaire présente une épaisseur comprise entre 0,1 mm et 20 mm, en particulier entre 1 mm et 5 mm, et/ou que la couche à effet tampon présente une épaisseur comprise entre 0,5 mm et 40 mm, de préférence entre 2 mm et 20 mm, en particulier de préférence entre 4 mm et 10 mm.
